# EUROPEAN PATENT APPLICATION

(11) **EP 4 616 946 A1**
(43) Date of publication of application: **17.09.2025**
(21) Application number: 23888166.8
(22) Date of filing: 07.11.2023
(51) Int. Cl.: B01J 31/12, C08G 65/02, C08G 65/12, C08G 63/08, C08G 63/83, C08G 64/30, C08G 69/16, C08G 69/20, C07F 1/02, C07F 1/04, C07F 1/06

(54) **ALKALI-METAL PHENOLIC COMPOUNDS AND USES THEREOF**

(30) Priority: 09.11.2022 ES 202230965
(71) Applicant: Universidad de Alcalá, 28801 Alcala de Henares (Madrid) (ES)
(72) Inventor: GONZÁLEZ MOSQUERA, Marta Elena, 28801 Alcalá de Henares Madrid (ES); PALENZUELA CEBRIÁN, Miguel, 28801 Alcalá de Henares Madrid (ES); SESSINI, Valentina, 28801 Alcalá de Henares Madrid (ES); RENTERO LLORENTE, Christian, 28801 Alcalá de Henares Madrid (ES)
(74) Representative: ABG Intellectual Property Law, S.L.
(86) International application number: PCT/ES2023/070656
(87) International publication number: WO 2024/100314

(57) **Abstract**

The present invention relates to the use of alkali-metal phenolic compounds of formula (I) or (II) as catalysts in ring-opening polymerisation of heterocycles, such as cyclical esters, ethers and carbonates, for the industrial production of biodegradable polymers. The present invention also relates to a polymerisation method using the compounds.

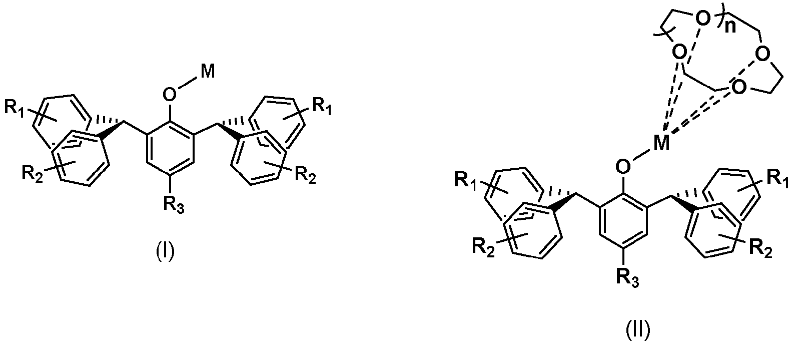

## Description

The present invention relates to the use of alkali-metal phenolic compounds as catalysts in ring-opening polymerisation of heterocycles, such as cyclical esters, ethers and carbonates, for the industrial production of biodegradable polymers.

Therefore, the present invention falls within the chemical sector, in the sub-sector of organic and inorganic synthetic chemistry and polymers, wherein the plastic materials obtained can have countless applications in sectors such as food packaging, agriculture, the textile industry, and in the production of consumer goods such as automobiles, household appliances, and a wide range of utensils.

### BACKGROUND OF THE INVENTION

Currently, there is considerable interest in the development of biodegradable polymers, among which aliphatic polyesters and polycarbonates stand out. Among these, polylactide or polylactic acid, abbreviated as PLA, is an aliphatic polyester that is produced on an industrial scale and has numerous applications in areas as important as food packaging, agriculture or consumer goods. For decades, numerous catalysts and different methods have been described for obtaining PLA, and the number of studies in this regard is increasing every year. The most widely used catalyst for its production is tin bis(2-ethylhexanoate) (commonly known as tin octanoate), a catalyst containing a toxic metal. Tin octanoate is a hazardous substance that can cause an allergic skin reaction, serious eye injuries, impair fertility or harm the foetus, and is highly harmful to aquatic organisms with long-lasting effects, but there are no better alternatives to its industrial use. Therefore, a final purification step is necessary to remove the unreacted reagent from the medium. This process involves high energy costs, which can often call into question the efficacy of the method.

The use of non-metallic catalysts has been proposed in extensive studies, however, the polymers obtained exhibit low molecular weights (Mₙ < 15 kDa), which often curtails many of their possible applications. Furthermore, they often use long reaction times which have negative effects on the economics of the process.

In PLA production processes described in various patent documents, such as, for example, EP2992029B1, WO2017128049A1 and EP2507289B1, the conversion of the lactide monomer into PLA polymer is not complete, i.e., at the end of the reaction, not all of the lactide has been converted into PLA. A significant fraction of lactide therefore remains in the final material, which negatively affects the properties and processing of the polymer. Additionally, in these processes, it is necessary to add a deactivating agent to deactivate the catalysts used in order to prevent reverse depolymerisation reactions. This agent is added to the reaction mixture when the monomer conversion reaches at least 90% and after the devolatilisation process that removes unreacted lactide from the medium. The depolymerisation method can take place when the monomer-polymer equilibrium is altered, i.e., when the unreacted monomer is removed from the medium.

There are numerous studies published in the literature with a wide range of organometallic compounds, many of them based on alkali metals (group 1) including potassium and also containing phenolate groups (Wu, Inorg. Chem. 2012, 51, 13380; Wu, Inorg. Chem. 2016, 55, 136; Wu, ACS Macro Lett. 2015, 4, 556; Tang, Inorganic Chemistry Communications 2010, 13, 376), acting as catalysts that produce polymers with low molecular weights, not exceeding 30 kDa. Furthermore, the catalysts described in these studies require a co-catalyst.

There are several patents that refer to the production process of lactide polymers; however, most patents describe an improvement to industrial processes for obtaining PLA (US5258488A, ES2017562, ES2292338, ES2311024) or for synthesising lactide monomer (US5247059A, US20110306749). The catalyst used is tin octanoate in most cases (US5770682A, US20110306749). Other patents describe in detail the use of new catalysts based on rare earth metals such as scandium, yttrium (US5292859), lanthanum, and others describe in detail the use of metals such as zirconium or hafnium (EP2992029B1), zinc (EP2507289B1), or metal-organic frameworks (WO2017128049A1). No patented method that uses alkali-metal catalysts as described in the present invention has been found.

In view of the aforementioned drawbacks existing in the prior art, the present invention describes non-toxic alkali-metal compounds for use in polymerisation reactions for obtaining polymers, such as PLA among others, with high molecular weights and on an industrial scale.

### DESCRIPTION OF THE INVENTION

The inventors have found that certain alkali-metal phenolic compounds catalyse polymerisation or copolymerisation reactions (jointly referred to as (co)polymerisation reactions) with quantitative yields, giving rise to polymers of great interest in a simple manner.

Therefore, in a first aspect, the present invention relates to the use of a compound of general formula (I) or (II): 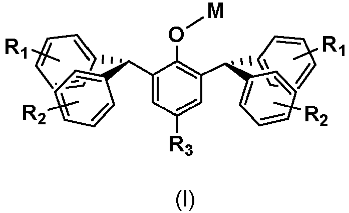 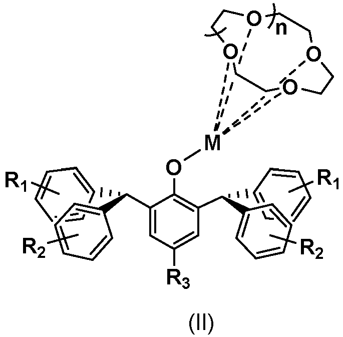 wherein:
R₁ and R₂ are selected independently from hydrogen, C₃-C₈ alkyl, C₃-C₈ haloalkyl, C₃-C₈ alkoxide, C₃-C₈ halo-alkoxide, C₃-C₈ dialkylamino, C₃-C₈ halo-dialkylamino, C₃-C₈ hydroxyalkyl or cyanide,
R₃ is selected from: H, C₃-C₈ alkyl, C₃-C₈ haloalkyl, C₃-C₈ cyanoalkyl, C₃-C₈ alkoxide, C₃-C₈ dialkylamino or cyanide,
n is an integer between 1 and 3, and
M is an alkali metal selected from Li, Na and K,
as a catalyst in methods for the ring-opening (co)polymerisation of heterocycles.

In reactions catalysed by the compounds of formula (I) or (II), a single heterocycle (polymerisation reactions), or at least two different heterocycles (copolymerisation reactions) can be involved.

In the present invention, the term "heterocycle" refers to a compound formed by a cyclical hydrocarbon chain having 3 to 20 links, wherein at least one carbon atom of the main chain has been substituted by O, N or S. It can be saturated or unsaturated, although they are preferably saturated. These heterocycles may optionally be substituted in one or more positions by one or more groups such as hydroxyl, amines, amides, oxo, cyano, halogens, aryl, etc.

The synthesis of the compounds of formula (I) is depicted in Scheme 1. The preparation of the compounds of general formulas (1) and (I) has already been described by D.J. Mindiola et al. in patent document US 2014/0213805 A1. Type (2) derivatives are the corresponding metallic precursors, and they are commercially available compounds or can be readily prepared by one skilled in the art.

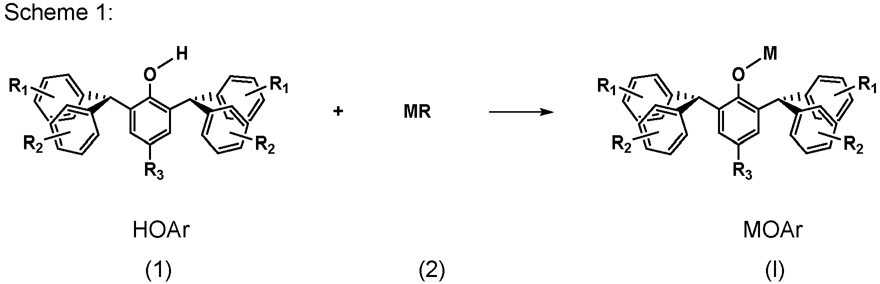

In the MR reagent (2), M is an alkali metal selected from Li, Na and K, and R represents a hydrogen atom, a halogen atom, or an alkyl, cycloalkyl, alkenyl, alkynyl, amide, haloalkyl, alkoxide, cycloalkoxide, halo-alkoxide, aryloxide, thioalkyl, thiocycloalkyl, thioaryl, amino, alkylamino, dialkylamino, halo-dialkylamino, cycloalkylamino, dicycloalkylamino, alkyl(cycloalkyl)amino, arylamino, diarylamino, alkylarylamino, cyanoalkyl or hydroxyalkyl radical, wherein the alkyl groups which are present in the mentioned radicals are preferably C₃-C₈ alkyls.

In the compound of general formula (1), R₁, R₂ and R₃ have the same meaning as they do for the radicals R₁, R₂ and R₃ of the previously described compound of formula (I).

Reacting a compound of general formula (1) with a compound of general formula (2) for obtaining a compound of general formula (I) can be carried out as described in patent document US 2014/0213805 A1. Briefly, the reaction is carried out under an inert atmosphere, for example, an argon or nitrogen atmosphere, in an aprotic solvent, at a temperature of between -90 and +50°C. The compounds thereby obtained are purified by standard purification methods, such as recrystallisation or washing with non-coordinating solvents, for example, n-hexane.

Aromatic hydrocarbons such as benzene or toluene; aliphatic hydrocarbons such as pentane, hexane, heptane, cyclohexane; ethers such as diethyl ether, dioxane, tetrahydrofuran (THF) or ethyl tertiary-butyl ether, can be used as an aprotic solvent.

In the presence of coordinating solvents such as THF or other neutral compounds such as crown ethers, the compounds of general formula (I) may incorporate them as a ligand into their coordination sphere.

The compounds of formula (II) can be obtained in a manner similar to how the compounds of formula (I) are obtained, i.e., by reacting the compound of general formula (1) with compounds of general formula (2), as described in patent document US 2014/0213805 A1, but adding a crown ether to the reaction medium, preferably in a compound of formula (1): crown ether molar ratio of 1:1. In a preferred embodiment, the crown ether used is 18-crown-6 ether.

The term "C₃-C₈ alkyl" and "C₃-C₈ cycloalkyl" used in the present invention refers to linear or cyclical carbon groups, respectively, between 3 and 8 carbon atoms which may or may not be branched. Examples of unbranched and linear alkyls are methyl, ethyl, propyl, pentyl, hexyl, heptyl. Examples of branched alkyls are 2-propyl, 2-butyl. The cyclical groups include cyclopropyl, cyclobutyl or cyclohexyl, among others.

The term "C₃-C₈ alkenyl" or "C₃-C₈ alkynyl" refers to groups with a definition similar to that used for alkyl groups, but having one or more double or triple bonds C=C, C≡C, respectively. They may or may not be branched and they may be linear or cyclical, between 3 and 8 carbon atoms. They may or may not be substituted, just as with the alkyl groups.

The term "amide" refers to groups such as (NH₂)⁻ or (N(alkyl)₂)⁻; alkyl is as previously defined (C₃-C₈ alkyl).

The term "halogen" (or halide) refers to F, Cl, Br or I.

The term "aryl" refers to simple or multiple aromatic rings in which a proton has been removed from the ring. Examples of aryl groups are phenyl, naphthyl and anthracenyl.

The term "C₃-C₈ haloalkyl" refers to C₃-C₈ alkyl groups with one or more halide substituents.

The term "C₃-C₈ alkoxide" (or "C₃-C₈ alkoxy") refers to groups such as O-C₃-C₈ alkyl.

The term "C₃-C₈ cycloalkoxide" refers to groups such as O-C₃-C₈ cycloalkyl.

The term "C₃-C₈ halo-alkoxide" refers to groups wherein the C₃-C₈ alkyl group of the alkoxide has one or more halide substituents.

The term "aryloxide" refers to groups such as O-aryl; aryl is as previously defined.

The term "C₃-C₈ thioalkyl" refers to groups such as S-C₃-C₈ alkyl.

The term "C₃-C₈ thiocycloalkyl" refers to groups such as S-C₃-C₈ cycloalkyl.

The term "thioaryl" refers to groups such as S-aryl; aryl is as previously defined.

The term "amino" refers to groups such as -NH₂.

The term "C₃-C₈ alkylamino" refers to amino groups wherein one of the hydrogens is substituted by a C₃-C₈ alkyl group.

The term "C₃-C₈ dialkylamino" refers to groups such as -N(alkyl)₂; alkyl is as previously defined (C₃-C₈ alkyl).

The term "C₃-C₈ halo-dialkylamino" refers to dialkylamino groups wherein at least one alkyl has a halide substituent.

The term "C₃-C₈ cycloalkylamino" refers to amino groups wherein one of the hydrogens is substituted by a C₃-C₈ cycloalkyl group.

The term "di(cycloalkyl)amino" refers to groups such as -N(cycloalkyl)₂; cycloalkyl as previously defined (C₃-C₈ cycloalkyl).

The term "alkyl(cycloalkyl)amino" refers to amino groups wherein the two hydrogens are substituted by an alkyl group and a cycloalkyl; these terms are as previously defined (C₃-C₈ alkyl or cycloalkyl).

The term "arylamino" refers to amino groups wherein one of the hydrogens is substituted by an aryl group, aryl is as previously defined.

The term "diarylamino" refers to groups such as -N(aryl)₂; aryl is as previously defined.

The term "C₃-C₈ alkylarylamino" refers to amino groups wherein the two hydrogens are substituted by a C₃-C₈ alkyl group and an aryl, respectively; C₃-C₈ alkyl and aryl are as previously defined.

The term "(cycloalkyl)arylamino" refers to amino groups wherein the two hydrogens are substituted by a C₃-C₈ cycloalkyl group and an aryl, respectively; cycloalkyl and aryl are as previously defined.

The term "C₃-C₈ cyanoalkyl" refers to an alkyl group substituted with one or more cyano (-CN) substituents.

The term "C₃-C₈ hydroxyalkyl" refers to an alkyl group substituted with one or more hydroxyl substituents.

In a preferred embodiment of the use of the compounds of formula (I) or (II), R₁ and R₂ are H.

In another preferred embodiment of the use of the compounds of formula (I) or (II), R₃ is a C₃-C₈ alkyl, more preferably *tert*-butyl.

In another preferred embodiment of the use of the compounds of formula (I) or (II), M is sodium or potassium.

In another preferred embodiment of the use of the compounds of formula (II), n is 3.

In a more preferred embodiment, the compound is selected from one of the following:

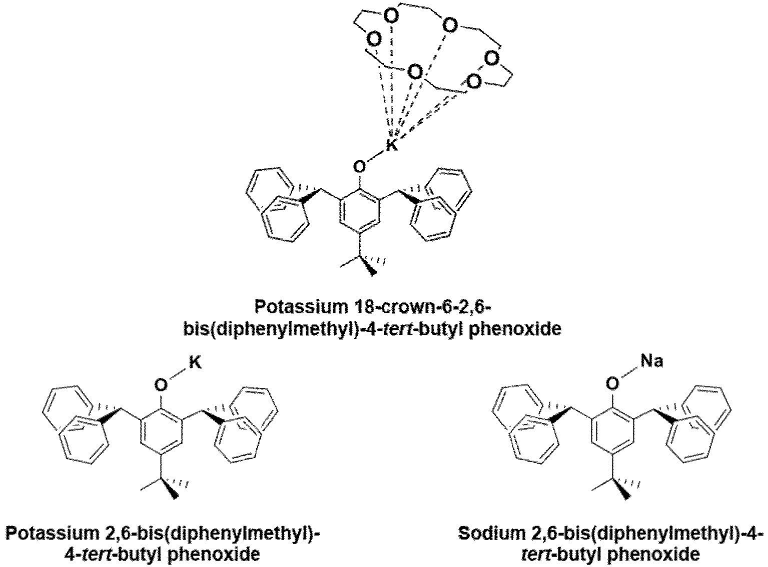

In (co)polymerisation reactions, the compounds of formula (I) or (II) also play the role of reaction initiators and/or regulators.

The described compounds of general formula (I) or (II) are particularly useful and active in ring-opening (co)polymerisation reactions of heterocycles selected from cyclical esters (including diesters, i.e., the ring includes two ester groups), ethers, thioethers, amides and carbonates.

In a preferred embodiment, the heterocycles are diesters, cyclical esters of general formula (a), cyclical amides of general formula (b) and cyclical carbonates of general formula (c), wherein cycles a), b) and c) can have between 3 and 20 links:

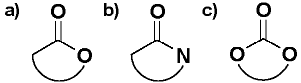

In a more preferred embodiment, the heterocycles are selected from: cyclical esters (including diesters) and carbonates. Preferably, the heterocycles are selected from: lactide, preferably *L*-lactide, *ε*-caprolactone, trimethylene carbonate and ethylene brassylate. More preferably, the starting heterocycle is lactide, preferably *L*-lactide, and/or *ε*-caprolactone. And even more preferably, the starting heterocycle is lactide, preferably *L*-lactide.

In another preferred embodiment, the heterocycles are selected from epoxides and thioepoxide.

Another aspect of the invention relates to a method for ring-opening polymerisation or copolymerisation of heterocycles selected from cyclical esters, ethers, thioethers and carbonates which comprises contacting the starting heterocycle or heterocycles with a compound of formula (I) or (II) as previously defined.

In a preferred embodiment, the preferred starting heterocycles are the heterocycles indicated in the first aspect of the invention.

In particular, the use of lactide as a starting heterocycle of the ring-opening polymerisation reaction allows PLA to be obtained at room temperature in just one minute. The obtained PLA has high molecular weights (greater than 100 kDa), which opens the door to the use of this method on an industrial scale. Additionally, the obtained polymer has a bimodal weight distribution, indicating that there are two very distinct groups of polymer chains present in the material. This bimodal distribution is due to a majority group of chains with a molecular weight of more than 100 kDa, while the second population of chains is made up of PLA oligomers of around 500 Da. The use of PLA oligomers as a plasticising additive for bioplastics, especially for industrially obtained PLA, which exhibits rigidity and fragility problems, is well known in the industry and is increasingly being produced and integrated into plastic formulations. The lactide polymerisation method described in the present invention allows obtaining a material that already contains in its composition that small fraction of PLA oligomers that acts as a plasticiser, which represents a major industrial breakthrough for the processing of the material without the need for subsequent modifications. Additionally, the conversion of the lactide monomer into PLA polymer is complete, i.e., at the end of the reaction, all the lactide has been converted into polylactide. This represents an improvement over the industrial process that uses tin octanoate as a catalyst, which does not convert all the monomer into polymer, leaving a significant fraction of lactide in the material that significantly worsens its physical properties, thereby requiring a purification process. With the method described in this invention, the purification of the material to remove the lactide monomer at the end of the reaction, which is required in industrial processes, is avoided.

The method can be carried out in the presence of a solvent or in the absence of a solvent if the starting heterocycle is a liquid. If the starting heterocycle is a solid at room temperature, the reaction can be carried out in a molten state.

In the event that the reaction is carried out in the presence of a solvent, said solvent is preferably an aprotic solvent, whether polar or apolar, such as aromatic hydrocarbons (toluene), ethers (tetrahydrofuran, THF), or aliphatic halogenated compounds (dichloromethane, DCM) and aromatic halogenated compounds (bromobenzene).

The (co)polymerisation reactions can be carried out in a wide range of temperatures, from 0°C to 200°C, it being preferable to perform the reactions between 15 and 30°C and, more preferably, at room temperature (20-25°C) provided that the reactions are performed in the presence of a solvent or the starting heterocycle is a liquid at said temperature. If the reaction takes place in a molten state, the reaction temperature will be at a temperature that is higher than the temperature at which the starting heterocycle or heterocycles melt.

The duration of the reactions can range from 1 second to 300 hours, but reaction times are generally comprised between 1 second and 72 hours.

In a preferred embodiment, the method is carried out in the presence of 0.1 to 2 mol% of a catalyst of formula (I) or (II) with respect to the starting heterocycle, more preferably, 2 mol%.

In a preferred embodiment, the method is carried out in the absence of co-catalysts, with the compound of formula (I) or (II) therefore being the only catalyst of the reaction.

In another preferred embodiment, the method is carried out in the presence of co-catalysts. Some examples of co-catalyst to be pointed out are benzyl or isopropyl alcohol.

In a preferred embodiment, the method is carried out starting from *L*-lactide in dichloromethane or toluene and at room temperature.

In another preferred embodiment, the method is carried out starting from *L*-lactide in the absence of a solvent, in a molten state at 145°C.

In another preferred embodiment, the method is carried out starting from *L*-lactide in dichloromethane at room temperature and in the presence of benzyl alcohol as a co-catalyst.

In a preferred embodiment, the method is carried out starting from *L*-lactide and *ε*-caprolactone in dichloromethane at room temperature.

In a preferred embodiment, the method is carried out starting from *ε*-caprolactone in the absence of a solvent (in a molten state) at 80°C.

In a preferred embodiment, the method is carried out starting from trimethylene carbonate or ethylene brassylate in the absence of a solvent (in a molten state) at 80°C.

The method thus described has significant advantages, as indicated below:
- the compounds of the invention comprise alkali metals such as lithium, sodium, or potassium, which do not possess intrinsic toxicity, which represents an advantage with respect to catalysts of the state of the art which comprise metals that are toxic or harmful to health;
- it can be carried out with the purified or unpurified monomer, and both in inert atmosphere and in air;
- the reaction has a quantitative yield, since all of the initial reagent is converted into product, which reduces the need to purify the obtained polymer;
- the obtained polymer does not undergo racemisation or depolymerisation reactions;
- a catalyst deactivator is not required in its final step to prevent depolymerisation and racemisation reactions;
- it is particularly advantageous for obtaining PLA with high molecular weights with a piezoelectric capacity potential;
- the polydispersity (M_{w}/Mₙ) of the (co)polymers obtained can be modified by leaving the reaction mixture at the reaction temperature after achieving complete conversion of the monomer(s) due to intra- or intermolecular chain transfer processes; the masses of the (co)polymers are scarcely affected during these processes (H. R. Kricheldorf, M. Berl and N. Scharnagl, Macromolecules, 1988, 21, 286.);
- the applications of the polymers which are obtained can be similar to the applications of conventional plastic products such as polypropylene, polystyrene, polyethylene, etc.

A final aspect of the invention relates to the use of the previously defined compounds of formula (I) or (II) as catalysts in methods for depolymerisation for obtaining oligomers and derivatives of the monomers forming a polymer. Said methods require the presence of an alcohol, for example, methanol, ethanol or benzyl alcohol, in large excess with respect to the proportion of catalyst, preferably above 50 equivalents. In this reaction, the alcohol is used as a chain transfer agent for obtaining derivatives of the starting heterocycle from polymers with heteroatoms in their structure. Said method would be comprised within the concept of chemical recycling.

The alcohol has a formula ROH, wherein R represents a C₃-C₈ alkyl or benzyl group. PLA oligomers and products derived from the starting heterocycle of interest, such as methyl lactate or ethyl lactate, which can be used as a solvent and are considered a better alternative to other more contaminating solvents, are thereby generated.

A preferred embodiment of the use of compounds of formula (I) or (II) as catalysts in methods for depolymerisation comprises the depolymerisation of polylactide in a DCM or ethyl acetate solution at 25°C by means of an alcoholysis process in the presence of methanol.

Throughout the description and claims, the word "comprises" and variants thereof do not intend to exclude other technical features, additives, components or steps. For those skilled in the art, other objects, advantages and features of the invention will become more apparent in part from the description and in part from putting the invention into practice. The following examples are provided by way of illustration and are not intended to be limiting of the present invention.

### EXAMPLES

Examples performed by the inventors and which clearly show the effectiveness of the method of the invention are shown below by way of non-limiting illustration of the invention.

### EXAMPLE 1: Preparation of the compound of general formula II: potassium 18-crown-6-2,6-bis(diphenylmethyl)-4-tert-butyl phenoxide (KOAr·crown).

1000 mg of 2,6-bis(diphenylmethyl)-4-*tert*-butylphenol (HOAr) of general formula 1 (described in: Keith Searles, Ba L. et al. Inorg. Chem. 2013, 52, 19, 11126-11135) are dissolved in 20 mL of diethyl ether in a Schlenk equipped with a magnetic stirrer under an argon atmosphere. The solution is added to a benzyl potassium (KBn) suspension in a cold bath at -78°C. After the addition, the red solution is kept under stirring at room temperature for one hour, when an insoluble white solid is formed. Next, 550 mg of 18-crown-6 ether are dissolved in 10 mL of diethyl ether under an argon atmosphere. Said solution is added to the aforementioned white suspension. A transparent solution is thereby generated and is kept under stirring for 30 minutes at room temperature, and it is finally taken to dryness under vacuum. 1480 mg are obtained (91% yield).

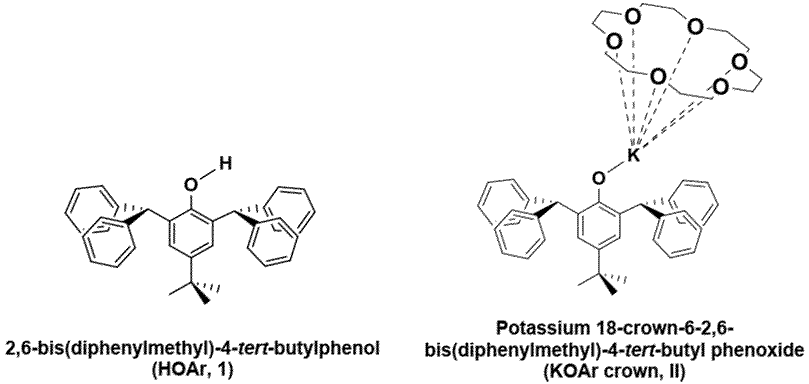

### EXAMPLE 2: Preparation of the compound of general formula I: potassium 2,6-bis(diphenylmethyl)-4-tert-butyl phenoxide (KOAr).

1000 mg of 2,6-bis(diphenylmethyl)-4-*tert*-butylphenol (HOAr) of general formula 1 are dissolved in 20 mL of diethyl ether in a Schlenk equipped with a magnetic stirrer under an argon atmosphere. The solution is added to a benzyl potassium (KBn) suspension in a cold bath at -78°C. After the addition, the red solution is kept under stirring at room temperature for one hour, when an insoluble white solid is formed. Next, the solution is filtered, and the solid is finally vacuum dried. 992 mg are obtained (92% yield).

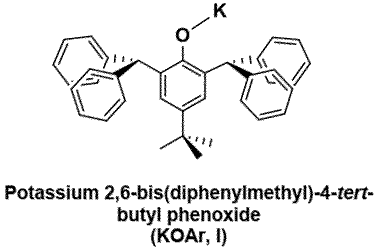

### EXAMPLE 3: Preparation of the compound of general formula I: sodium 2,6-bis(diphenylmethyl)-4-tert-butyl phenoxide (NaOAr).

1000 mg of 2,6-bis(diphenylmethyl)-4-*tert*-butylphenol (HOAr) of general formula 1 are dissolved in 20 mL of diethyl ether in a Schlenk equipped with a magnetic stirrer under an argon atmosphere. Sodium bis(trimethylsilyl)amide is added to the solution in a cold bath at -78°C. After 15 minutes, the solution is kept under stirring at room temperature for one hour. All the solvent is evaporated under vacuum, and dry hexane is added to remove the formed amine. Next, the solution is filtered, and the solid is finally vacuum dried. 1830 mg are obtained (95% yield).

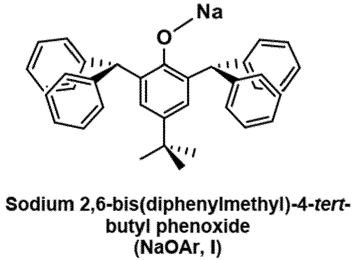

### EXAMPLE 4: Preparation of lactide polymers in dichloromethane (DCM) solution.

50 mg of **potassium 18-crown-6-2,6-bis(diphenylmethyl)-4-*tert*-butyl phenoxide (KOAr·crown**, prepared as described in Example 1) are dissolved in 10 mL of DCM and added to 4 g of recrystallised *L*-lactide in a vial inside a dry box. After 15 minutes of reaction at 25°C, the obtained polymer is vacuum dried. According to the ¹H-NMR spectroscopy study, the monomer-to-polymer conversion is 83%. GPC-SEC studies performed in THF with polystyrene standards and a correction factor show that a mixture of macromolecules (M_{w}/Mₙ = 1.5) having moderate molecular weights (M_{w} = 20.7 kDa) is obtained.

### EXAMPLE 5: Preparation of lactide polymers in toluene solution.

50 mg of **potassium 18-crown-6-2,6-bis(diphenylmethyl)-4-*tert*-butyl phenoxide (KOAr·crown**, prepared as described in Example 1) are dissolved in 20 mL of toluene and added to 4 g of recrystallised *L*-lactide in a vial inside a dry box. After 30 minutes of reaction at 25°C, the obtained polymer is vacuum dried. According to the ¹H-NMR spectroscopy study, the monomer-to-polymer conversion is >99%. GPC-SEC studies performed in THF with polystyrene standards and a correction factor show that a mixture of macromolecules (M_{w}/Mₙ = 1.3) having moderate molecular weights (M_{w} = 30.7 kDa) is obtained.

### EXAMPLE 6: Preparation of lactide polymers in the absence of a solvent at 145°C.

50 mg of **potassium 18-crown-6-2,6-bis(diphenylmethyl)-4-*tert*-butyl phenoxide (KOAr·crown**, prepared as described in Example 1) are added to 4 g of recrystallised *L*-lactide melted in a ROTAFLO ampoule. After 14 hours of reaction at 145°C, the solution acquires certain viscosity. According to the ¹H-NMR spectroscopy study, the monomer-to-polymer conversion is 93%. GPC-SEC studies performed in THF with polystyrene standards and a correction factor show that a mixture of macromolecules (M_{w}/Mₙ = 2.5) having moderate molecular weights (M_{w} = 14.4 kDa) is obtained.

### EXAMPLE 7: Preparation of lactide polymers in dichloromethane (DCM) solution.

50 mg of **potassium 2,6-bis(diphenylmethyl)-4-*tert*-butyl phenoxide (KOAr,** prepared as described in Example 2) are dissolved in 10 mL of DCM and added to 6 g of recrystallised *L*-lactide in a vial inside a dry box. After 1 minute of reaction at 25°C, the solution acquires a high viscosity. The obtained polymer is vacuum dried. According to the ¹H-NMR spectroscopy study, the monomer-to-polymer conversion is >99%. GPC-SEC studies performed in THF with polystyrene standards and a correction factor show that a mixture of macromolecules (M_{w}/Mₙ = 2.4) having high molecular weights (M_{w} = 190.3 kDa) is obtained.

### EXAMPLE 8: Preparation of lactide polymers in dichloromethane (DCM) solution in the presence of benzyl alcohol as a co-catalyst.

50 mg of **potassium 2,6-bis(diphenylmethyl)-4-*tert*-butyl phenoxide (KOAr,** prepared as described in Example 2) and 11 µL of benzyl alcohol (BnOH) are dissolved in 10 mL of DCM and added to 6 g of recrystallised *L*-lactide in a vial inside a dry box. After 4 minutes of reaction at 25°C, the solution acquires a high viscosity. The obtained polymer is vacuum dried. According to the ¹H-NMR spectroscopy study, the monomer-to-polymer conversion is >99%. GPC-SEC studies performed in THF with polystyrene standards show that a mixture of macromolecules (M_{w}/Mₙ = 1.3) having high molecular weights (M_{w} = 43.2 kDa) is obtained.

### EXAMPLE 9: Preparation of lactide polymers in the absence of a solvent at 145°C.

50 mg of **potassium 2,6-bis(diphenylmethyl)-4-*tert*-butyl phenoxide (KOAr,** prepared as described in Example 2) are added to 6 g of recrystallised *L*-lactide melted in a ROTAFLO ampoule. After 14 hours of reaction at 145°C, the solution acquires a high viscosity. According to the ¹H-NMR spectroscopy study, the monomer-to-polymer conversion is 95%. GPC-SEC studies performed in THF with polystyrene standards show that a mixture of macromolecules (M_{w}/Mₙ = 2.4) having moderate molecular weights (M_{w} = 19.4 kDa) is obtained.

### EXAMPLE 10: Preparation of polymers from unpurified lactide in dichloromethane solution.

50 mg of **potassium 2,6-bis(diphenylmethyl)-4-*tert*-butyl phenoxide** (**KOAr,** prepared as described in Example 2) are dissolved in 10 mL of DCM and added to 6 g of *L*-lactide taken directly from an uncovered bottle in a Schlenk connected to a Schlenk line under an argon atmosphere. After 1 minute of reaction at 25°C, the solution acquires a high viscosity. The obtained polymer is vacuum dried. According to the ¹H-NMR spectroscopy study, the monomer-to-polymer conversion is >99%.

### EXAMPLE 11: Preparation of lactide polymers in dichloromethane (DCM) solution.

50 mg of **sodium 2,6-bis(diphenylmethyl)-4-*tert*-butyl phenoxide** (**NaOAr**, prepared as described in Example 3) are dissolved in 10 mL of DCM and added to 6 g of recrystallised *L*-lactide in a vial inside a dry box. After 1 minute of reaction at 25°C, the solution acquires a high viscosity. The obtained polymer is vacuum dried. According to the ¹H-NMR spectroscopy study, the monomer-to-polymer conversion is >99%. GPC-SEC studies performed in THF with polystyrene standards show that a mixture of macromolecules (M_{w}/Mₙ = 2.6) having high molecular weights (M_{w} = 275.9 kDa) is obtained.

### EXAMPLE 12: Preparation of polymers from unpurified lactide in dichloromethane solution.

50 mg of **sodium 2,6-bis(diphenylmethyl)-4-*tert*-butyl phenoxide** (**NaOAr**, prepared as described in Example 3) are dissolved in 10 mL of DCM and added to 6 g of *L*-lactide taken directly from an uncovered bottle in a Schlenk connected to a Schlenk line under an argon atmosphere. After 1 minute of reaction at 25°C, the solution acquires a high viscosity. The obtained polymer is vacuum dried. According to the ¹H-NMR spectroscopy study, the monomer-to-polymer conversion is >99%.

### EXAMPLE 13: Preparation of ε-caprolactone polymers in the absence of a solvent at 80°C.

50 mg of **potassium 2,6-bis(diphenylmethyl)-4-*tert*-butyl phenoxide** (**KOAr**, prepared as described in Example 2) are dissolved in 4.6 mL of *ε*-caprolactone in a ROTAFLO ampoule connected to a Schlenk line under an argon atmosphere, and it is placed in a bath at 80°C. After 2 hours of reaction, the medium acquires a high viscosity. The obtained polymer is vacuum dried. According to the ¹H-NMR spectroscopy study, the monomer-to-polymer conversion is 95%. GPC-SEC studies performed in THF with polystyrene standards show that a mixture of macromolecules (M_{w}/Mₙ = 2.2) having high molecular weights (M_{w} = 105.1 kDa) is obtained.

### EXAMPLE 14: Preparation of lactide and ε-caprolactone diblock copolymers in dichloromethane solution.

50 mg of **potassium 2,6-bis(diphenylmethyl)-4-*tert*-butyl phenoxide** (**KOAr**, prepared as described in Example 2) are dissolved in 4.6 mL of *ε*-caprolactone in a ROTAFLO ampoule connected to a Schlenk line under an argon atmosphere, and it is placed in a bath at 80°C. After 2 hours, a solution of 6 g of *L*-lactide in 10 mL of DCM is added at room temperature. The obtained polymer is vacuum dried. According to the ¹H-NMR spectroscopy study, the ε-caprolactone-to-polymer conversion was 95%, while the *L*-lactide achieved 92% conversion in 3 hours. GPC-SEC studies performed in THF with polystyrene standards show that a mixture of macromolecules (M_{w}/Mₙ = 2.6) having high molecular weights (M_{w} = 102.1 kDa) is obtained.

### EXAMPLE 15: Preparation of trimethylene carbonate polymers in the absence of a solvent at 80°C.

50 mg of **potassium 2,6-bis(diphenylmethyl)-4-*tert*-butyl phenoxide** (**KOAr**, prepared as described in Example 2) are added to 4.3 g of trimethylene carbonate melted in a ROTAFLO ampoule. After 14 hours of reaction at 80°C, the medium acquires a high viscosity. According to the ¹H-NMR spectroscopy study, the monomer-to-polymer conversion is 93%. GPC-SEC studies performed in THF with polystyrene standards show that a mixture of macromolecules (M_{w}/Mₙ = 2.2) having moderate molecular weights (M_{w} = 40.5 kDa) is obtained.

### EXAMPLE 16: Preparation of polymers from ethylene brassylate in the absence of a solvent at 80°C.

50 mg of **potassium 2,6-bis(diphenylmethyl)-4-*tert*-butyl phenoxide** (**KOAr**, prepared as described in Example 2) are dissolved in 11 mL of ethylene brassylate in a ROTAFLO ampoule connected to a Schlenk line under an argon atmosphere, and it is placed in a bath at 80°C. After 14 hours of reaction, the medium acquires a high viscosity. According to the ¹H-NMR spectroscopy study, the monomer-to-polymer conversion is >99%. GPC-SEC studies performed in THF with polystyrene standards show that a mixture of macromolecules (M_{w}/Mₙ = 2.3) having high molecular weights (M_{w} = 83.1 kDa) is obtained.

### EXAMPLE 17: Depolymerisation of polylactide in dichloromethane (DCM) and methanol solution at 25°C.

200 mg of **potassium 18-crown-6-2,6-bis(diphenylmethyl)-4-*tert*-butyl phenoxide (KOAr·crown**, prepared as described in Example 1) are dissolved in a solvent mixture comprising 28 mL DCM and 7 mL methanol and added to 4 g of commercially available poly-*L*-lactide (PLLA) in a Schlenk connected to a Schlenk line under an argon atmosphere. The reaction is carried out at 25°C for 10 minutes. According to the ¹H-NMR spectroscopy study, the polymer-to-methyl-*L*-lactate conversion is 99%, obtaining complete degradation of PLLA and 1% oligomers as a byproduct. It should be pointed out that said byproduct can be separated from the desired product by distillation.

### EXAMPLE 18: Depolymerisation of polylactide in dichloromethane (DCM) and methanol solution a 25°C.

200 mg of **potassium 2,6-bis(diphenylmethyl)-4-*tert*-butyl phenoxide** (**KOAr**, prepared as described in Example 2) are dissolved in a solvent mixture comprising 40 mL DCM and 10 mL methanol and added to 6 g of commercially available poly-*L*-lactide (PLLA) in a Schlenk connected to a Schlenk line under an argon atmosphere. The reaction is carried out at 25°C for 10 minutes. According to the ¹H-NMR spectroscopy study, the polymer-to-methyl-*L*-lactate conversion is 99%, obtaining complete degradation of PLLA and 1% oligomers as a byproduct. It should be pointed out that said byproduct can be separated from the desired product by distillation.

### EXAMPLE 19: Depolymerisation of polylactide in ethyl acetate (AcOEt) and methanol solution at 25°C.

200 mg of potassium 2,6-bis(diphenylmethyl)-4-*tert*-butyl phenoxide (**KOAr**, prepared as described in Example 2) are dissolved in a solvent mixture comprising 40 mL AcOEt and 10 mL methanol and added to 6 g of commercially available poly-*L*-lactide (PLLA) in a Schlenk connected to a Schlenk line under an argon atmosphere. The reaction is carried out at 25°C for 60 minutes. According to the ¹H-NMR spectroscopy study, the polymer-to-methyl-*L*-lactate conversion is 97%, obtaining complete degradation of PLLA and 3% oligomers as byproducts. The proportion of oligomers is variable and is related to the proportion of alcohol used, such that by reducing the proportion of alcohol, a higher proportion of oligomers is achieved. It should be pointed out that said byproduct can be separated from the desired product by distillation.

## Claims

1. Use of a compound of formula (I) or (II): 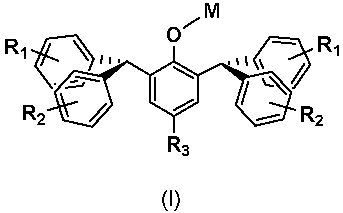 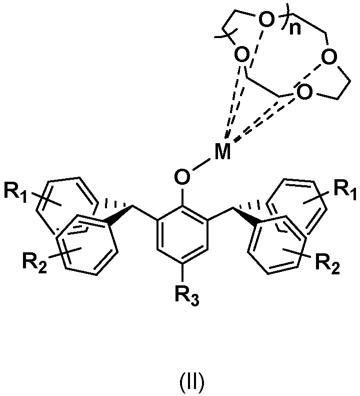 wherein:
R₁ and R₂ are selected independently from hydrogen, C₃-C₈ alkyl, C₃-C₈ haloalkyl, C₃-C₈ alkoxide, C₃-C₈ halo-alkoxide, C₃-C₈ dialkylamino, C₃-C₈ halo-dialkylamino, C₃-C₈ hydroxyalkyl or cyanide,
R₃ is selected from: H, C₃-C₈ alkyl, C₃-C₈ haloalkyl, C₃-C₈ cyanoalkyl, C₃-C₈ alkoxide, C₃-C₈ dialkylamino or cyanide, and
n is an integer between 1 and 3, and
M is an alkali metal selected from Li, Na and K.
as a catalyst in methods for the ring-opening (co)polymerisation of heterocycles.

2. Use according to claim 1, wherein R₁ and R₂ are H.

3. Use according to claim 1 or 2, wherein R₃ is C₃-C₈ alkyl.

4. Use according to claim 3, wherein the alkyl is *tert*-butyl.

5. Use according to any of the preceding claims, wherein M is Na or K.

6. Use according to any of the preceding claims, wherein the compound of formula (I) and (II) is selected from the following:

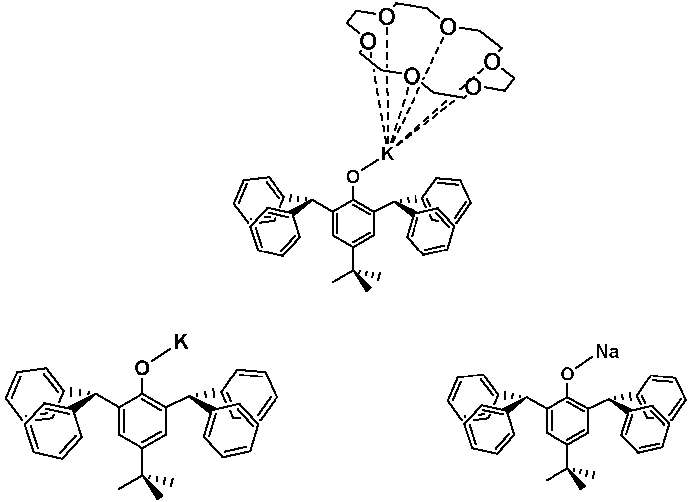

7. Use according to any of the preceding claims, wherein the heterocycles are selected from cyclical esters, diesters, ethers, thioethers, amides and carbonates.

8. Use according to claim 1, wherein the heterocycles are selected from: lactide, ε-caprolactone, trimethylene carbonate and ethylene brassylate.

9. Use according to claims 1 and 2, wherein the heterocycles are epoxides or thioepoxides.

10. A method for ring-opening polymerisation or copolymerisation of heterocycles which comprises contacting the starting heterocycle or heterocycles with a compound of formula (I) or (II) as defined in any of claims 1 to 6.

11. The method according to claim 10, wherein the starting heterocycle is as defined in any of claims 7 to 9.

12. The method according to claim 10 or 11, which is carried out at room temperature.

13. The method according to any of the preceding claims 10 to 12, which is carried out in the presence of a solvent or in the absence of a solvent if the starting heterocycle is a liquid.

14. The method according to any of the preceding claims 10 to 12, which is carried out in the presence of a polar or apolar aprotic solvent.

15. The method according to any of the preceding claims 10 or 11, which is carried out in a molten state.

16. The method according to any of the preceding claims 10 to 15, wherein the compound of formula (I) or (II) is present in an amount of between 0.1 and 2 mol% with respect to the starting heterocycle.

17. The method according to any of the preceding claims 10 to 16, which is carried out in the presence or absence of co-catalysts.

18. Use of the compounds of formula (I) or (II) defined in any of claims 1 to 6 as catalysts in methods for the depolymerisation of polymers with heteroatoms in their structure for obtaining oligomers and derivatives of the monomers forming a polymer, wherein said method is carried out in the presence of an R-OH alcohol, wherein R is a C₃-C₈ alkyl or benzyl radical.

19. Compounds of formula (II): 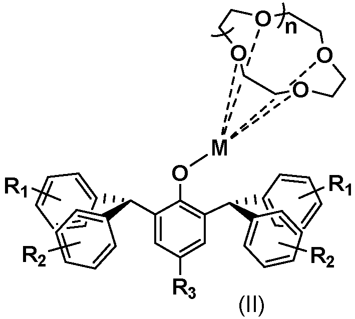 wherein R₁, R₂, R₃, n and M are defined in any of claims 1 to 6.
